# EUROPÄISCHE PATENTSCHRIFT

(11) **EP 4 402 385 B1**
(45) Veröffentlichungstag und Bekanntmachung des Hinweises auf die Patenterteilung: **02.07.2025**
(21) Anmeldenummer: 22770001.0
(22) Anmeldetag: 01.09.2022
(51) Int. Cl.: F16B 13/12

(54) **SPREIZDÜBEL**
EXPANSION ANCHOR
DISPOSITIF D'ANCRAGE À EXPANSION

(30) Priorität: 14.09.2021 DE 102021123744
(43) Veröffentlichungstag der Anmeldung: 24.07.2024
(73) Patentinhaber: fischerwerke GmbH & Co. KG, 72178 Waldachtal (DE)
(72) Erfinder: FREY, Christian, 72250 Freudenstadt-Wittlensweiler (DE)
(86) Internationale Anmeldenummer: PCT/EP2022/074287
(87) Internationale Veröffentlichungsnummer: WO 2023/041336

(56) Entgegenhaltungen:
- DE-A1- 1 650 979
- DE-A1- 1 775 571
- DE-A1- 2 635 882
- DE-U- 1 944 573

## Beschreibung

Die Erfindung betrifft einen Spreizdübel mit den Merkmalen des Oberbegriffs des Anspruchs 1.

Spreizdübel sind an sich bekannt. Sie werden durch Einschrauben einer Spreizschraube oder durch Einbringen eines anderen, normalerweise stiftförmigen Spreizelements aufgespreizt und lassen sich dadurch in einem Ankerloch verankern.

Das Gebrauchsmuster DE 1 944 573 U offenbart einen Spreizdübel, der, beginnend an einem in Einbringrichtung in ein Ankerloch vorderen Ende durch einen Längsschlitz, der den Spreizdübel in einer Axialebene durchsetzt, in zwei Spreizlaschen geteilt ist, die sich über ungefähr 2/3 einer Länge des Spreizdübels erstrecken. Durch Einschrauben einer Spreizschraube in den Spreizdübel und zwischen die beiden Spreizlaschen lassen sich die Spreizlaschen auseinander drücken, was als Aufspreizen des Spreizdübels aufgefasst werden kann, wodurch der Spreizdübel in einem Ankerloch verankerbar ist. Beginnend an einem hinteren Ende der Spreizlaschen weist der bekannte Spreizdübel zwei einander gegenüber angeordnete Kragfinger auf, die vor einem in Einbringrichtung in ein Ankerloch fernen hinteren Ende des Spreizdübels enden. Vordere Enden der Kragfinger gehen einstückig in den Spreizdübel über und freie hintere Enden der Kragfinger stehen radial nach außen über eine Mantelfläche des Spreizdübels über. Von Innenseiten der Kragfinger stehen rippenförmige Ansätze, die sich über ungefähr eine hintere Hälfte der Kragfinger erstrecken, radial nach innen in einen Schraubkanal des Spreizdübels, so dass die Kragfinger durch Einschrauben der Spreizschraube radial auseinander drückbar, das heißt aufspreizbar sind. Die Kragfinger des bekannten Spreizdübels spreizen in derselben Richtung auf wie seine Spreizlaschen.

Aufgabe der Erfindung ist, einen nahe eines hinteren Endes aufspreizbaren Spreizdübel vorzuschlagen, der für Spreizschrauben mit verschiedenen Gewindedurchmessern und Gewindekerndurchmessern geeignet ist. Vorzugsweise soll der Spreizdübel auch in anderen Segmenten des Spreizdübels, insbesondere in einem vorderen Segment aufspreizbar sein.

Diese Aufgabe wird erfindungsgemäß durch die Merkmale des Anspruchs 1 gelöst. Der erfindungsgemäße Spreizdübel weist auf: ein vorderes Dübelende, ein hinteres Dübelende, eine Dübelachse und einen hülsenartigen Dübelkörper, der koaxial zur Dübelachse ist und einen zu der Dübelachse koaxialen Schraubkanal umschließt. Des Weiteren weist der erfindungsgemäße Spreizdübel ein und vorzugsweise mehrere Kragfederelemente auf, die gleichmäßig oder ungleichmäßig über einen Umfang des Spreizdübels beispielsweise in jeweils einer Öffnung in einer Umfangswand des Dübelkörpers angeordnet sind. Das Kragfederelement ist beispielsweise stiftförmig mit eckigem oder rundem Querschnitt, oder streifenförmig. Ein vorderes, dem vorderen Dübelende zugewandtes Ende des Kragfederelements ist starr mit dem Spreizdübel, insbesondere geht das vordere Ende des Kragfederelements einstückig in den Spreizdübel beziehungsweise den hülsenartigen Dübelkörper über. Ein hinteres, dem hinteren Dübelende zugewandtes Ende des Kragfederelements ist frei und durch Biegen des Kragfederelements radial zur Dübelachse beweglich. Eine Beweglichkeit des Kragfederelements in anderen Richtungen schließt die Erfindung nicht aus. Von vorn nach hinten, das heißt aus Richtung des vorderen Dübelendes in Richtung des hinteren Dübelendes, verläuft das Kragfederelement in einem spitzen Winkel zur Dübelachse schräg nach außen. Das gilt jedenfalls für eine der Dübelachse abgewandten Außenseite des Kragfederelements. Dadurch befindet sich das hintere Ende des Kragfederelements weiter außen als das vordere Ende, das heißt die der Dübelachse abgewandte Außenseite des Kragfederelements weist am hinteren Ende des Kragfederelements einen größeren radialen Abstand von der Dübelachse auf als am vorderen Ende des Kragfederelements. Ist das Kragfederelement unverformt und insbesondere nicht aufgespreizt, steht es radial nach außen über eine das Kragfederelement umschließende Mantelfläche des Dübelkörpers über. Wird der Spreizdübel in ein Ankerloch eingebracht, das den Durchmesser des Dübelkörpers aufweist, drückt eine Wand des Ankerlochs das Kragfederelement radial nach innen.

In einem vorderen Abschnitt, der sich an das vordere Ende des Kragfederelements anschließt, weist das Kragfederelement erfindungsgemäß eine größere Biegesteifigkeit radial zur Dübelachse auf als in einem hinteren Abschnitt, der sich in Richtung des hinteren Endes des Kragfederelements an den vorderen Abschnitt des Kragfederelements anschließt. "Größere Biegesteifigkeit" bedeutet, dass ein gegebenes Biegemoment um eine zur Dübelachse tangentiale Achse das Kragfederelement in seinem vorderen Abschnitt weniger in radialer Richtung zur Dübelachse biegt, als in seinem hinteren Abschnitt. Die Biegesteifigkeit bedeutet ein axiales Flächenträgheitsmoment bezüglich der Biegung des Kragfederelements in radialer Richtung zur Dübelachse beziehungsweise bezüglich der zur Dübelachse tangentialen Achse des Kragfederelements. Das Kragfederelement des erfindungsgemäßen Spreizdübels ist in seinem vorderen Abschnitt steifer und wird durch eine in den Spreizdübel eingeschraubte Spreizschraube stärker aufgespreizt als in dem hinteren Abschnitt des Kragfederlements. Der weniger biegesteife hintere Abschnitt des Kragfederelements formt sich besser an die Lochwand des Ankerlochs an und verbessert dadurch einen von dem aufgespreizten Kragfederelement verursachten Halt des Spreizdübels im Ankerloch.

Das Kragfederelement ist insbesondere in einer Öffnung in einer Umfangswand des hülsenartigen Dübelkörpers angeordnet, die die Umfangswand des Dübelkörpers von einer der Dübelachse abgewandten Außenseite zu einer der Dübelachse zugewandten Innenseite und damit zum Schraubkanal durchsetzt. Das vordere Ende des Kragfederelements geht bei dieser Ausgestaltung der Erfindung an einem vorderen, dem vorderen Dübelende zugewandten Rand der Öffnung in den Dübelkörper über.

Das Kragfederelement ist insbesondere zu einem Aufspreizen des Spreizdübels in einem hinteren Segment des Spreizdübels vorgesehen. Das Kragfederelement befindet sich deswegen insbesondere in einem hinteren Segment des Spreizdübels, das heißt in einer hinteren Hälfte und insbesondere in einem hinteren Drittel einer Länge des Spreizdübels, wobei die Länge eine Erstreckung des Spreizdübels in Richtung der Dübelachse ist. Vorzugsweise ist der Spreizdübel auch außerhalb des hinteren Segments aufspreizbar.

Ein Abstand des hinteren Endes des Kragfederelements vom hinteren Dübelende ist vorzugsweise kürzer als eine Erstreckung des Kragfederelements in Richtung der Dübelachse, oder kürzer als ein Außendurchmesser oder ein Halb des Außendurchmessers des Dübelkörpers am hinteren Ende des Kragfederelements.

Eine Ausgestaltung der Erfindung sieht ein Gewindeeingriffelement zu einem Eingriff in ein Schraubengewinde der Spreizschraube, die in den Schraubkanal eingeschraubt wird oder ist, vor, das von einer der Dübelachse zugewandten Innenseite des Kragfederelements in Richtung der Dübelachse absteht. Das Gewindeeingriffelement ragt zwischen zwei benachbarten Gewindegängen in das Schraubengewinde und hält die Spreizschraube beispielsweise bei einer Überkopfmontage gegen Herausfallen aus dem Spreizdübel, wenn die Spreizschraube erst ein kurzes Stück in den Spreizdübel eingebracht ist. Das Kragfederelement kann auch mehrere Gewindeeingriffelemente aufweisen, die in Richtung der Dübelachse zueinander versetzt sind. Es ist möglich, den Spreizdübel ohne die einzuschraubende Spreizschraube in ein Bohrloch einzubringen und die Spreizschraube erst anschließend in Eingriff mit dem Gewindeeingriffelement zu bringen, wodurch diese vor Herausfallen gesichert ist. Dies ist möglich, da das Gewindeeingriffelement eine gewisse Elastizität aufweist. Es ist auch möglich, die Spreizschraube mit dem Spreizdübel vor dem Einbringen in das Bohrloch zusammenzuführen. Erst durch das anschließende Einführen des Spreizdübels in das Bohrloch tritt das Gewindeeingriffelement in Kontakt mit dem Gewinde der Spreizschraube und sichert diese vor Herausfallen.

Eine Ausgestaltung der Erfindung sieht eine in Richtung vom vorderen Ende in Richtung des hinteren Endes abnehmende Dicke des Kragfederelements radial zur Dübelachse in dem hinteren Abschnitt des Kragfederelements vor, der die kleinere Biegesteifigkeit radial zur Dübelachse aufweist als der vordere Abschnitt des Kragfederelements. Durch die nach hinten abnehmende Dicke im hinteren Abschnitt des Kragfederelements nimmt die Biegesteifigkeit im hinteren Abschnitt des Kragfederelements aus Richtung des vorderen Endes in Richtung des hinteren Endes des Kragfederelements ab.

Eine Ausgestaltung der Erfindung sieht eine Stütze an der der Dübelachse zugewandten Innenseite des Kragfederelements vor, die nach innen in Richtung der Dübelachse von der Innenseite des Kragfederelements absteht. In einer Längsrichtung des Kragfederelements gesehen befindet sich die Stütze in einem an das vordere Ende des Kragfederelements in Richtung des hinteren Endes anschließenden Abschnitt. Die Stütze stützt sich radial an der Spreizschraube ab, wenn die Spreizschraube in den Schraubkanal des Spreizdübels eingeschraubt ist. Über die Stütze drückt die Spreizschraube, wenn sie in den Schraubkanal des Spreizdübels eingeschraubt wird oder ist, das Kragfederelement in dem an das vordere Ende des Kragfederelements in Richtung des hinteren Endes anschließenden Abschnitt radial nach außen, wodurch eine feste Anlage des Kragfederelements an der Wand des Ankerlochs erreicht wird. Die Stütze kann zumindest geringfügig als eine Art "Biegepunkt", respektive "Biegebereich" für das Kragfederelement, der "nahe" am vorderen Ende des Kragfederelements ausgebildet ist, wirken. Die Spreizschraube drückt die Stütze radial nach außen und presst das Kragfederelement an dieser Stelle fest gegen das Ankerloch. Hierbei kann auch der Bereich, in welchem das Kragfederelement mit dem Dübelkörper verbunden ist, ebenfalls leicht nach außen in Richtung der Wand gezwungen, respektive gebogen werden. Die Stütze sorgt dafür, dass das Kragfederelement durch das Einschrauben einer Spreizschraube in den Spreizdübel bereits auf Höhe der Stütze fest gegen die Wand des Ankerlochs gepresst wird. Dies sorgt, verglichen mit dem in dem Gebrauchsmuster DE 1 944 573 U offenbarten Spreizdübel, welcher keine derartige Stütze aufweist, für deutlich verbesserte Haltewerte, da das Kragfederelement im Wesentlichen über die komplette Länge von der Spreizschraube gegen die Wand gepresst wird. Bei dem Spreizdübel des Stands der Technik ist das Anpressen im Wesentlichen lediglich auf den Bereich konzentriert, in dem die eingangs erwähnten, rippenförmigen Ansätze ausgebildet sind.

Tangential zur Dübelachse ist die Stütze vorzugsweise schmaler als das Kragfederelement in einem radial außen an die Stütze angrenzenden Bereich, insbesondere weist das Kragfederelement im Bereich der Stütze einen T-Querschnitt auf.

Bei unverformtem, das heißt nicht aufgespreiztem Kragfederelement verläuft eine der Dübelachse zugewandte Innenseite oder Stützfläche der Stütze parallel zur Dübelachse. Wenn die Spreizschraube in den Spreizdübel eingeschraubt ist oder wird, drückt das Schraubengewinde beziehungsweise der Gewindekern des Schraubengewindes der Spreizschraube gegen die Innenseite oder Stützfläche der Stütze.

Der erfindungsgemäße Spreizdübel weist vorzugsweise mehr als ein Kragfederelement auf, die gleich- oder ungleichmäßig über den Umfang des Spreizdübels beziehungsweise des hülsenartigen Dübelkörpers verteilt angeordnet sind. Insbesondere weist der Spreizdübel zwei identisch ausgebildete und einander bezüglich der Dübelachse gegenüber angeordnete Kragfederelemente auf.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:

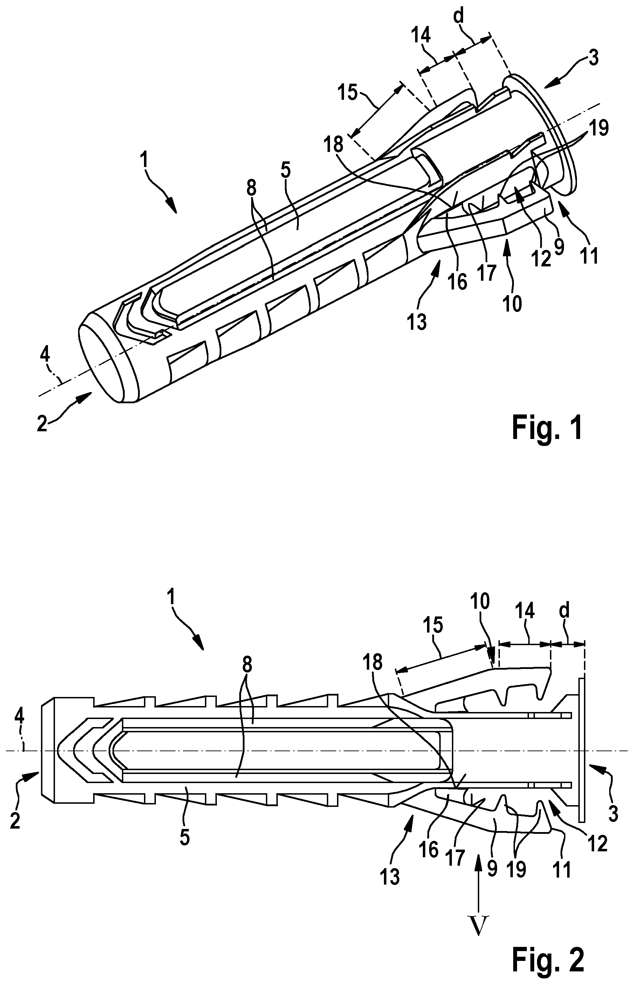

- Figur 1: eine perspektivische Darstellung eines Spreizdübels gemäß der Erfindung;
- Figur 2: eine Seitenansicht des Spreizdübels aus Figur 1;

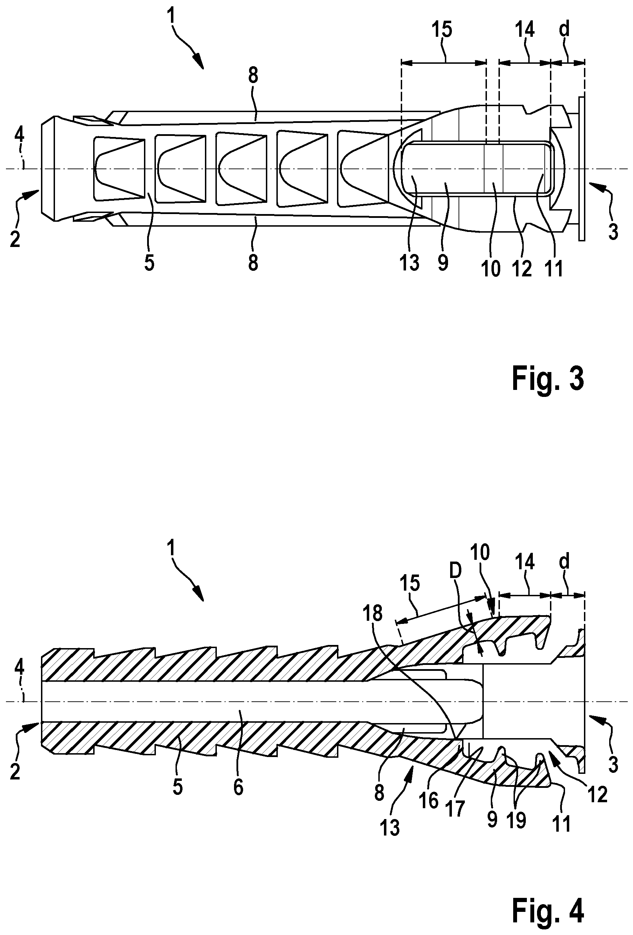

- Figur 3: eine gegenüber Figur 2 um 90° gedrehte Seitenansicht des Spreizdübels aus Figur 1;
- Figur 4: einen Achsschnitt des Spreizdübels aus Figur 1 mit gleicher Blickrichtung wie in Figur 2;
- Figur 5: eine vergrößerte Einzelheit gemäß Pfeil V in Figur 2; und
- Figur 6: eine vergrößerte Darstellung eines hinteren Segments des Spreizdübels aus Figur 1 in einem Figur 4 entsprechenden Achsschnitt bei einem Einschrauben einer Spreizschraube.

Der in der Zeichnung dargestellte, erfindungsgemäße Spreizdübel 1 ist - im Ausführungsbeispiel - einstückig durch Spritzgießen aus Kunststoff hergestellt. Er weist ein vorderes Dübelende 2, ein hinteres Dübelende 3, eine Dübelachse 4 und einen hülsenartigen und zu der Dübelachse 4 koaxialen Dübelkörper 5 auf, der einen zu der Dübelachse 4 koaxialen Schraubkanal 6 umschließt. Der Dübelkörper 5 beziehungsweise der Schraubkanal 6 sind zu einem Einschrauben einer Spreizschraube 7 durch das hintere Dübelende 3 zum Aufspreizen des Spreizdübels 1 vorgesehen. "Vorderes Dübelende 2" meint das Ende, mit dem voran der Spreizdübel 1 in ein Ankerloch eingebracht wird. "Hinteres Dübelende 3" meint das entgegengesetzte, dem Ankerloch ferne Ende.

In seinem Dübelkörper 5 weist der Spreizdübel 1 vier parallel zur Dübelachse 4 verlaufende Längsschlitze 8 auf, die - im Ausführungsbeispiel - mit Abstand vom vorderen und vom hinteren Dübelende 2, 3 enden, das heißt die Längsschlitze 8 sind an beiden Enden geschlossen. Die Längsschlitze 8 definieren einen Spreizbereich des Spreizdübels 1, in dem der Spreizdübel 1 beziehungsweise sein Dübelkörper 5 durch Einschrauben der Spreizschraube 7 in den Schraubkanal 6 aufweitbar ist, um ihn in einem nicht dargestellten Ankerloch zu befestigen. Das Aufweiten des Spreizdübels 1 durch Einschrauben der Spreizschraube 7 in den Schraubkanal 6 kann auch als Aufspreizen des Spreizdübels 1 und die Befestigung des Spreizdübels 1 durch das Aufspreizen im Ankerloch als Verankerung des Spreizdübels 1 im Ankerloch aufgefasst werden. Eine andere Anzahl, Anordnung und/oder Form von Schlitzen anstelle der beschriebenen und dargestellten Längsschlitze 8 ist möglich (nicht dargestellt).

In einem hinteren Segment, der sich über nicht mehr als eine Hälfte und vorzugsweise nicht mehr als ein Drittel einer Länge des Spreizdübels 1 in Richtung der Dübelachse 4 erstreckt, weist der Spreizdübel 1 zwei einander gegenüber angeordnete Kragfederelemente 9 auf. Im Ausführungsbeispiel sind die Kragfederelemente 9 stangenförmig mit einer kleinen Abwinklung 10 und weisen einen rechteckigen Querschnitt mit - im Ausführungsbeispiel - einer konstanten Breite in tangentialer Richtung zur Dübelachse 4 und einer sich über eine Länge der Kragfederelemente 9 ändernden Dicke radial zur Dübelachse 4 auf. Ein Abstand d hinterer, dem hinteren Dübelende 3 zugewandter Enden 11 der Kragfederelemente 9 vom hinteren Dübelende 3 ist im Ausführungsbeispiel nicht größer als ein Halb eines Außendurchmessers des Dübelkörpers 5.

Die Kragfederelemente 9 sind in Öffnungen 12 des Dübelkörpers 5 des erfindungsgemäßen Spreizdübels 1 angeordnet, wobei vordere, dem vorderen Dübelende 2 zugewandte Enden 13 der Kragfederelemente 9 einstückig an einem vorderen Rand der Öffnungen 12 in den Dübelkörper 5 übergehen. Ausgehend von ihren vorderen Enden 13 in Richtung der hinteren Enden 11 verlaufen die Kragfederelemente 9 schräg in einem spitzen Winkel zur Dübelachse 4 nach außen, das heißt ein radialer Abstand der Kragfederelemente 9 von der Dübelachse 4 vergrößert sich in Richtung der hinteren Enden 11 der Kragfederelemente 9, wobei sich der Winkel der Kragfederelemente 9 zur Dübelachse 4 an der Abwinklung 10 der Kragfederelemente 9 verkleinert. Die hinteren Enden 11 der Kragfederelemente 9 sind frei, das heißt nicht mit dem Dübelkörper 5 verbunden, so dass sie durch elastisches Biegen der Kragfederelemente 9 radial zur Dübelachse 4 nach innen und außen beweglich sind. Aufgrund ihres Verlaufs zur Dübelachse 4 schräg in Richtung ihrer hinteren Enden 11 nach außen stehen die Kragfederelemente 9 und ihre hinteren Enden 11 radial nach außen über eine Mantelfläche des Dübelkörpers 5 nach außen über.

Von der Abwinklung 10 zum hinteren Ende 11 nimmt die Dicke D der Kragfederelemente 9 radial zur Dübelachse 4 ab, wodurch auch eine Biegesteifigkeit der Kragfederelemente 9 in einem hinteren Abschnitt 14 der Kragfederelemente 9 abnimmt. Die Biegesteifigkeit ist ein axiales Flächenträgheitsmoment der Kragfederelemente 9 bezüglich einer Biegung beziehungsweise eines Biegemoments um eine Achse tangential zur Dübelachse 4. In einem vorderen Abschnitt 15 ist die Biegesteifigkeit beziehungsweise das axiale Flächenträgheitsmoment der Kragfederelemente 9 bezüglich der Biegung beziehungsweise des Biegemoments um die Achse tangential zur Dübelachse 4 größer. Im Ausführungsbeispiel erstreckt sich der vordere Abschnitt 15 mit der größeren Biegesteifigkeit vom vorderen Ende 13 bis zur Abwinklung 10 und der hintere Abschnitt 14 mit der niedrigeren beziehungsweise zum hinteren Ende 11 der Kragfederelemente 9 abnehmenden Biegesteifigkeit erstreckt sich von der Abwinklung 10 bis zum hinteren Ende 11 der Kragfederelemente 9. Andere Ausgestaltungen sind möglich, wobei die Biegesteifigkeit in einem an die vorderen Enden 13 der Kragfederelemente 9 anschließenden vorderen Abschnitt 15 der Kragfederelemente 9 größer als die Biegesteifigkeit in einem hinteren Abschnitt 14 ist, der sich an den vorderen Abschnitt 15 anschließt oder sich jedenfalls näher an den hinteren Enden 11 der Kragfederelemente 9 befindet.

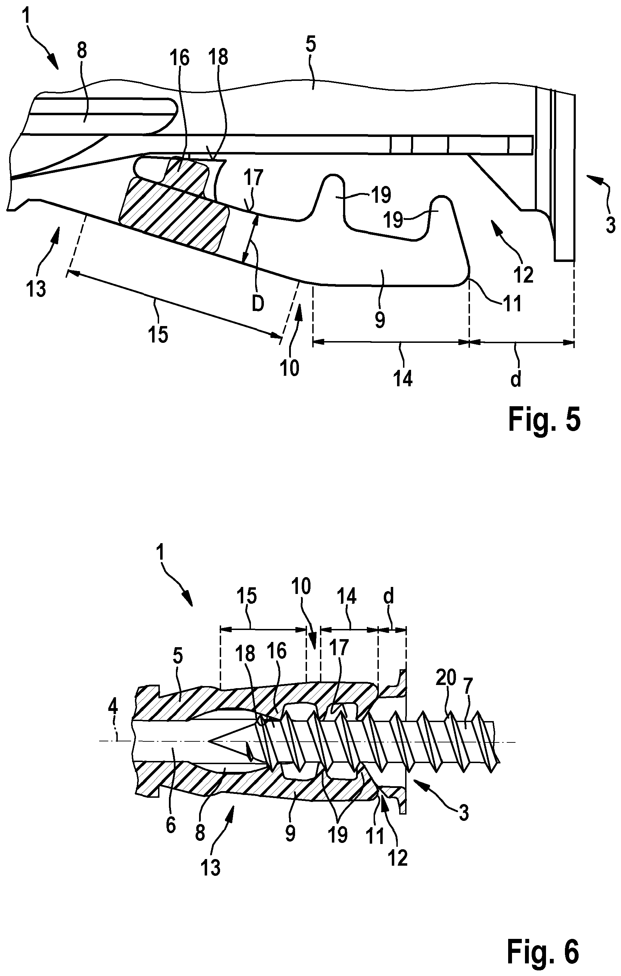

Im vorderen Abschnitt 15 weisen die Kragfederelemente 9 eine Stütze 16 auf, die von der Dübelachse 4 zugewandten Innenseiten 17 nach innen in Richtung der Dübelachse 4 von den Kragfederelementen 9 absteht. Die Stützen 16 beginnen an den vorderen Enden 13 der Kragfederelemente 9 und erstrecken sich im Ausführungsbeispiel über etwa ein Drittel bis ein Halb der Länge der vorderen Abschnitte 15 der Kragfederelemente 9. Längere oder eventuell auch kürzere Stützen 16 sind möglich. Tangential zur Dübelachse 4 sind die Stützen 16 schmaler als die Kragfederelemente 9 außerhalb der Stützen 16 so, dass die Kragfederelemente 9 im Bereich der Stützen 16 einen T-Querschnitt aufweisen, der in Figur 5 in das Kragfederelement 9 eingezeichnet ist. Die Stützen 16 erhöhen die Biegesteifigkeit der Kragfederelemente 9 in dem vorderen Abschnitt 15 zusätzlich und sorgen dafür, dass die Spreizschraube 7 das jeweilige Kragfederelement 9 bereits auf Höhe der jeweiligen Stütze 16 fest gegen das Ankerloch drückt. Der Bereich des jeweiligen vorderen Endes 13, in welchem die Kragfederelemente 9 mit dem Dübelkörper 5 verbunden sind, wird hierbei ebenfalls zumindest geringfügig in Richtung des Ankerlochs gezwungen, da die Stütze 16 geringfügig als "Biegepunkt", genauer formuliert "Biegebereich" für das jeweilige Kragfederelement 9 wirkt. Der Dübelachse 4 zugewandte Stützflächen 18 der Stützen 16 verlaufen parallel oder näherungsweise parallel zur Dübelachse 4, wenn die Kragfederelemente 9 unverformt, das heißt nicht elastisch nach innen oder außen oder auch in einer anderen Richtung gebogen sind.

Im hinteren Abschnitt 14 weisen die Kragfederelemente 9 von ihren Innenseiten 17 in Richtung der Dübelachse 4 abstehende - im Ausführungsbeispiel zahnartige - Gewindeeingriffelemente 19 auf.

Die Erfindung ist nicht auf die beschriebenen Kragfederelemente 9 beschränkt. Möglich ist zumindest theoretisch ein Spreizdübel mit nur einem Kragfederelement oder ein Spreizdübel mit mehr als zwei Kragfederelementen, die gleich oder ungleichmäßig über den Umfang des Spreizdübels verteilt angeordnet sein können (nicht dargestellt). Auch die Form und Anordnung der Kragfederelemente ist nicht auf das dargestellte und beschriebene Ausführungsbeispiel der Erfindung beschränkt.

Zu einer Verankerung in einem nicht dargestellten, beispielsweise gebohrten, zylindrischen Ankerloch in einem Ankergrund wie beispielsweise einer Gebäudewand oder einer Decke wird der Spreizdübel 1 mit seinem vorderen Dübelende 2 voraus in das Ankerloch eingebracht, bis er sich vollständig in dem Ankerloch beziehungsweise im Ankergrund befindet. Eine Wand des Ankerlochs drückt die ursprünglich radial nach außen aus dem Dübelkörper 5 des Spreizdübels 1 vorstehenden Kragfederelemente 9 radial nach innen in Richtung der Dübelachse 4, wie es Figur 6 zeigt. Zum Aufspreizen wird, wie in Figur 6 dargestellt, die Spreizschraube 7 vom hinteren Dübelende 3 in den Schraubkanal 6 des Spreizdübels 1 eingebracht. Die von den Kragfederelementen 9 nach innen stehenden Gewindeeingriffelemente 19 gelangen in Eingriff mit einem Schraubengewinde 20 der Spreizschraube 7 derart, dass beispielsweise bei einer Überkopfmontage die Spreizschraube 7 gegen Herausfallen aus dem Spreizdübel 1 gehalten ist.

Beim Einschrauben der Spreizschraube 7 in den Schraubkanal 6 des Spreizdübels 1 drückt die Spreizschraube 7 die Kragfederelemente 9, die sich mit den Gewindeeingriffelementen 19 und den Stützen 16 an der Spreizschraube 7 abstützen, radial auseinander, was auch als Aufspreizen der Kragelemente 9 aufgefasst werden kann. Die Spreizschraube 7 drückt die Kragelemente 9 nach außen gegen die Lochwand des Ankerlochs. Dabei bewirken die Stützen 16, die mit ihren Stützflächen 18 an der Spreizschraube 7 anliegen, eine starke Aufspreizung der Kragelemente 9. Durch die kleinere Biegesteifigkeit in den hinteren Abschnitten 14 der Kragfederelemente 9 passen sich die hinteren Abschnitte 14 der Kragfederelemente 9 an Spreizschrauben 7 mit unterschiedlichen Durchmessern an und formen sich an die Lochwand des Ankerlochs an. Dadurch ergibt sich in Verbindung mit der starken Aufspreizung durch die größere Biegesteifigkeit in den vorderen Abschnitten 15 der Kragfederelemente 9 ein guter Halt, das heißt eine gute Verankerung des aufgespreizten Spreizdübels 1 im Ankerloch.

In einem vorderen Segment des Spreizdübels 1 vom vorderen Dübelende 2 bis zu den vorderen Enden 13 der Kragfederelemente 9 weitet beziehungsweise spreizt die Spreizschraube 7 den Dübelkörper 5 des Spreizdübels 1 auf, wodurch der Spreizdübel 1 auch in diesem vorderen Segment im Ankerloch verankert ist beziehungsweise wird.

### Bezugszeichenliste

### Spreizdübel

- d: Abstand
- D: Dicke Kragfederelement 9
- 1: Spreizdübel
- 2: vorderes Dübelende
- 3: hinteres Dübelende
- 4: Dübelachse
- 5: Dübelkörper
- 6: Schraubkanal
- 7: Spreizschraube
- 8: Längsschlitz
- 9: Kragfederelement
- 10: Abwinklung
- 11: hinteres Ende des Kragfederelements 9
- 12: Öffnung
- 13: vorderes Ende des Kragfederelements 9
- 14: hinterer Abschnitt
- 15: vorderer Abschnitt
- 16: Stütze
- 17: Innenseite
- 18: Stützfläche
- 19: Gewindeeingriffelement
- 20: Schraubengewinde

## Patentansprüche

1. Spreizdübel (1), mit einem vorderen Dübelende (2) und mit einem hinteren Dübelende (3), mit einer Dübelachse (4), mit einem hülsenartigen, zur Dübelachse (4) koaxialen Dübelkörper (5), der einen zu der Dübelachse (4) koaxialen Schraubkanal (6) zum Einschrauben einer Spreizschraube (7) zum Aufspreizen des Spreizdübels (1) umschließt, und mit einem Kragfederelement (9), welches schräg aus Richtung des vorderen Dübelendes (2) in Richtung des hinteren Dübelendes (3) nach außen in einem spitzen Winkel zu der Dübelachse (4) angeordnet ist, dessen vorderes, dem vorderen Dübelende (2) näheres Ende (13) starr mit dem Dübelkörper (5) und dessen hinteres, dem hinteren Dübelende (3) näheres, freies Ende (11) durch Biegen des Kragfederelements (9) radial zur Dübelachse (4) beweglich ist und bei nicht verformtem Kragfederelement (9) radial nach außen über eine das Kragfederelement (9) umschließende Mantelfläche des Dübelkörpers (5) übersteht, **dadurch gekennzeichnet, dass** das Kragfederelement (9) in einem an das vordere Ende (13) anschließenden vorderen Abschnitt (15) des Kragfederelements (9) eine größere Biegesteifigkeit radial zur Dübelachse (4) aufweist als in einem sich in Richtung zum hinteren Ende (11) des Kragfederelements (9) an den vorderen Abschnitt (15) des Kragfederelements (9) anschließenden hinteren Abschnitt (14) des Kragfederelements (9).

2. Spreizdübel (1) nach Anspruch 1, **dadurch gekennzeichnet, dass** das Kragfederelement (9) in einer Öffnung (12) des Dübelkörpers (5) angeordnet ist, wobei das vordere Ende (13) des Kragfederelements (9) einstückig an einem Rand der Öffnung (12) in den Dübelkörper (5) übergeht.

3. Spreizdübel (1) nach Anspruch 1 oder 2, **dadurch gekennzeichnet, dass** das Kragfederelement (9) in einer hinteren Hälfte, insbesondere in einem hinteren Drittel des Spreizdübels (1) angeordnet ist.

4. Spreizdübel (1) nach einem oder mehreren der Ansprüche 1 bis 3, **dadurch gekennzeichnet, dass** das Kragfederelement (9) in einem Abstand (d) vom hinteren Dübelende (3) am Dübelkörper (5) angeordnet ist, der kürzer als das Kragfederelement (9) in Richtung der Dübelachse (4) lang ist.

5. Spreizdübel (1) nach einem oder mehreren der vorhergehenden Ansprüche, **dadurch gekennzeichnet, dass** das Kragfederelement (9) ein von seiner der Dübelachse (4) zugewandten Innenseite (17) in Richtung der Dübelachse (4) abstehendes Gewindeeingriffelement (19) zu einem Eingriff in ein Schraubengewinde (20) der in den Schraubkanal (6) des Spreizdübels (1) eingeschraubten Spreizschraube (7) aufweist.

6. Spreizdübel (1) nach einem oder mehreren der vorhergehenden Ansprüche, **dadurch gekennzeichnet, dass** eine Dicke (D) des Kragfederelements (9) radial zur Dübelachse (4) vom vorderen Ende (13) zum hinteren Ende (11) des Kragfederelements (9) im hinteren Abschnitt (14) des Kragfederelements (9) abnimmt.

7. Spreizdübel (1) nach einem oder mehreren der vorhergehenden Ansprüche, **dadurch gekennzeichnet, dass** das Kragfederelement (9) in einem sich in Richtung des hinteren Endes (11) des Kragfederelements (9) an das vordere Ende (13) des Kragfederelements (9) anschließenden Abschnitt eine von der der Dübelachse (4) zugewandten Innenseite (17) des Kragfederelements (9) nach innen in Richtung der Dübelachse (4) abstehende Stütze (16) aufweist, an der die in den Schraubkanal (6) des Spreizdübels (1) eingeschraubte Spreizschraube (7) das Kragfederelement (9) radial von der Dübelachse (4) weg nach außen beaufschlagt.

8. Spreizdübel (1) nach Anspruch 7, **dadurch gekennzeichnet, dass** die Stütze (16) tangential zur Dübelachse (4) schmaler ist als das Kragfederelement (9) in einem radial außen an die Stütze (16) angrenzenden Bereich.

9. Spreizdübel (1) nach Anspruch 7 oder 8, **dadurch gekennzeichnet, dass** eine der Dübelachse (4) zugewandte Stützfläche (18) der Stütze (16) bei unverformtem Kragelement (9) parallel oder etwa parallel zur Dübelachse (4) verläuft.

10. Spreizdübel (1) nach einem oder mehreren der vorhergehenden Ansprüche, **dadurch gekennzeichnet, dass** der Spreizdübel (1) zwei bezüglich der Dübelachse (4) einander gegenüber angeordnete Kragfederelemente (9) aufweist, die insbesondere symmetrisch zur Dübelachse (4) angeordnet sind.

## Claims

1. Expansion dowel (1), with a front end of the dowel (2) and with a rear end of the dowel (3), with a dowel axis (4), with a sleeve-like dowel body (5) which is coaxial with the dowel axis (4) and which encloses a screw channel (6), coaxial with the dowel axis (4), for screwing in an expansion screw (7) for expanding the expansion dowel (1) and with a cantilever spring element (9) which is arranged obliquely outwards from the direction of the front end of the dowel (2) in the direction of the rear end of the dowel (3) at an acute angle to the dowel axis (4), the front end (13) of which, which is closer to the front end of the dowel (2), is rigidly connected to the dowel body (5) and the rear end (11) of which, which is closer to the rear end of the dowel (3), is connected to the dowel body (5) by means of free end (11) is movable radially to the dowel axis (4) by bending the cantilever spring element (9) and, when the cantilever spring element (9) is not deformed, projects radially outwards beyond a lateral surface of the dowel body (5) surrounding the cantilever spring element (9), **characterised in that in that** the cantilever spring element (9) has a greater bending stiffness radially to the dowel axis (4) in a front section (15) of the cantilever spring element (9) adjoining the front end (13) than in a rear section (14) of the cantilever spring element (9) adjoining the front section (15) of the cantilever spring element (9) in the direction of the rear end (11) of the cantilever spring element (9).

2. Expansion dowel (1) according to claim 1, **characterised in that** the cantilever spring element (9) is arranged in an opening (12) of the dowel body (5), wherein the front end (13) of the cantilever spring element (9) merges integrally into the dowel body (5) at one edge of the opening (12).

3. Expansion dowel (1) according to claim 1 or 2, **characterised in that** the cantilever spring element (9) is arranged in a rear half, in particular in a rear third, of the expansion dowel (1).

4. Expansion dowel (1) according to one or more of claims 1 to 3, **characterised in that** the cantilever spring element (9) is arranged on the dowel body (5) at a distance (d) from the rear end of the dowel (3) which is shorter than the length of the cantilever spring element (9) in the direction of the dowel axis (4).

5. Expansion dowel (1) according to one or more of the preceding claims, **characterised in that** the cantilever spring element (9) has a thread engagement element (19) projecting from its inner side (17) facing the dowel axis (4) in the direction of the dowel axis (4) for engagement in a screw thread (20) of the spreader screw (7) screwed into the screw channel (6) of the expansion dowel (1).

6. Expansion dowel (1) according to one or more of the preceding claims, **characterised in that** a thickness (D) of the cantilever spring element (9) decreases radially to the dowel axis (4) from the front end (13) to the rear end (11) of the cantilever spring element (9) in the rear section (14) of the cantilever spring element (9).

7. Expansion dowel (1) according to one or more of the preceding claims, **characterised in that** the cantilever spring element (9) has, in a section adjoining the front end (13) of the cantilever spring element (9) in the direction of the rear end (11) of the cantilever spring element (9), a support element (16) projecting inwards in the direction of the dowel axis (4) from the inner side (17) of the cantilever spring element (9) facing the dowel axis (4), at which the spreader screw (7) screwed into the screw channel (6) of the expansion dowel (1) acts on the cantilever spring element (9) radially outwards away from the dowel axis (4).

8. Expansion dowel (1) according to claim 7, **characterised in that** the support element (16) is narrower tangentially to the dowel axis (4) than the cantilever spring element (9) in an area radially adjacent to the outside of the support element (16).

9. Expansion dowel (1) according to claim 7 or 8, **characterised in that** a supporting surface (18) of the support (16) facing the dowel axis (4) runs parallel or approximately parallel to the dowel axis (4) when the cantilever element (9) is undeformed.

10. Expansion dowel (1) according to one or more of the preceding claims, **characterised in that** the expansion dowel (1) has two cantilever spring elements (9) which are arranged opposite one another with respect to the dowel axis (4) and which are arranged in particular symmetrically with respect to the dowel axis (4).

## Revendications

1. Cheville à expansion (1), avec une extrémité avant (2) et une extrémité arrière (3), avec un axe de cheville (4), avec un corps de cheville (5) en forme de douille, coaxial à l'axe de cheville (4), qui entoure un canal de vissage (6) coaxial à l'axe de la cheville (4) pour visser une vis à expansion (7) destinée à écarter la cheville à expansion (1), et avec un élément à ressort (9) qui est disposé obliquement depuis la direction de l'extrémité avant de la cheville (2) vers l'extrémité arrière de la cheville (3) vers l'extérieur en formant un angle aigu avec l'axe de la cheville (4), dont l'extrémité avant (13) plus proche de l'extrémité avant de la cheville (2) est reliée de manière rigide au corps de la cheville (5) et dont l'extrémité arrière (12) plus proche de l'extrémité arrière de la cheville (3) est mobile radialement par rapport à l'axe de la cheville (4) par flexion de l'élément à ressort (9) et peut être déplacée vers l'extrémité arrière de la cheville (3) et est reliée extrémité arrière (11) de la cheville, plus proche de l'extrémité arrière de la cheville (3), est mobile radialement par rapport à l'axe de la cheville (4) par flexion de l'élément à ressort (9) et, lorsque l'élément à ressort (9) n'est pas déformé, dépasse radialement vers l'extérieur au-delà d'une surface d'enveloppe du corps de cheville (5) entourant l'élément à ressort (9), **caractérisé en ce que** que l'élément à ressort (9) présente, dans un segment avant (15) de l'élément à ressort (9) se raccordant à l'extrémité avant (13), une plus grande rigidité à la flexion radialement par rapport à l'axe de la cheville (4) qu' dans un segment arrière (14) de l'élément à ressort (9) se raccordant à l'extrémité avant (15) de l'élément à ressort (9) en direction de l'extrémité arrière (11) de l'élément à ressort (9).de l'élément à ressort (9).

2. Cheville à expansion (1) selon la revendication 1, **caractérisée en ce que** l'élément à ressort (9) est disposé dans une ouverture (12) du corps de cheville (5), dans lequel l'extrémité avant (13) de l'élément à ressort (9) se prolonge d'un seul tenant dans le corps de cheville (5) au niveau d'un bord de l'ouverture (12).

3. Cheville à expansion (1) selon les revendications 1 ou 2, **caractérisée en ce que** l'élément à ressort (9) est disposé dans une moitié arrière, en particulier dans un tiers arrière de la cheville à expansion (1).

4. Cheville à expansion (1) selon une ou plusieurs des revendications 1 à 3, **caractérisée en ce que** l'élément à ressort en porte-à-faux (9) est disposé sur le corps de la cheville (5) à une distance (d) de l'extrémité arrière de la cheville (3) qui est plus courte que la longueur de l'élément à ressort en porte-à-faux (9) dans la direction de l'axe de la cheville (4).

5. Cheville à expansion (1) selon une ou plusieurs des revendications précédentes, **caractérisée en ce que en ce que** l'élément à ressort (9) présente un élément de filetage (19) qui fait saillie depuis sa face intérieure (17) tournée vers l'axe de la cheville (4) dans la direction de l'axe de la cheville (4) pour s'engager dans un filetage de vis (20) de la vis à expansion (7) vissée dans le canal de vissage (6) de la cheville à expansion (1).

6. Cheville à expansion (1) selon une ou plusieurs des revendications précédentes, **caractérisée en ce que** l'épaisseur (D) de l'élément à ressort (9) dans le segment arrière (14) de l'élément à ressort (9) diminue radialement par rapport à l'axe de la cheville (4) depuis l'extrémité avant (13) vers l'extrémité arrière (11) de l'élément à ressort (9).

7. Cheville à expansion (1) selon une ou plusieurs des revendications précédentes, **caractérisée en ce que en ce que** l'élément à ressort (9) présente, dans un segment se raccordant à l'extrémité avant (13) de l'élément à ressort (9) dans la direction de l'extrémité arrière (11) de l'élément à ressort (9), un support (16) faisant saillie vers l'intérieur en direction de l'axe de la cheville (4) depuis la face intérieure (17) de l'élément à ressort (9) tournée vers l'axe de la cheville (4), sur laquelle la vis à expansion (7) vissée dans le canal de vissage (6) de la cheville à expansion (1) sollicite l'élément à ressort (9) radialement vers l'extérieur, à l'écart de l'axe de la cheville (4).

8. Cheville à expansion (1) selon la revendication 7, **caractérisée en ce que** le support (16) est plus étroit tangentiellement à l'axe de la cheville (4) que l'élément à ressort (9) dans une zone adjacente radialement à l'extérieur au support (16).

9. Cheville à expansion (1) selon la revendication 7 ou 8, **caractérisée en ce qu'**une surface d'appui (18) du support (16) tournée vers l'axe de la cheville (4) s'étend parallèlement ou à peu près parallèlement à l'axe de la cheville (4) lorsque l'élément en saillie (9) n'est pas déformé.

10. Cheville à expansion (1) selon une ou plusieurs des revendications précédentes, **caractérisée en ce que** la cheville à expansion (1) comporte deux éléments à ressort en porte-à-faux (9) disposés l'un en face de l'autre par rapport à l'axe de la cheville (4), qui sont en particulier disposés symétriquement par rapport à l'axe de la cheville (4).
